# EUROPEAN PATENT APPLICATION

(11) **EP 4 625 092 A1**
(43) Date of publication of application: **01.10.2025**
(21) Application number: 24166064.6
(22) Date of filing: 25.03.2024
(51) Int. Cl.: G05D 23/19

(54) **CONTROL SYSTEM**

(71) Applicant: Mitsubishi Electric Europe B.V., Hatfield, Hertfordshire AL10 8XB (GB)
(72) Inventor: TAKATSUKA, Yuya, Hertfordshire, AL10 8XB (GB); IWATA, Nobu, Hertfordshire, AL10 8XB (GB); DRINGER, Alex, Hertfordshire, AL10 8XB (GB)
(74) Representative: Mewburn Ellis LLP

(57) **Abstract**

A system (100) comprising an electrical apparatus (102) operable to supply thermal energy to a medium in a space to attain a setpoint temperature of the medium; and a server (104) is disclosed. The server (104) is configured to generate a control instruction schedule comprising a required output from the electrical apparatus (102) in each of the plurality of time slots. The control instruction is generated based on a determined required thermal energy to be supplied and on the classification of each of the plurality of time slots based on first predictive information indicative of a supply-demand ratio of power supplied. The control instruction schedule is generated to minimise a proportion of output required from the electrical apparatus (102) in a time slot where the first predictive information indicates a low supply-demand ratio. Also provided are a method and a computer program.

## Description

### Field of the Invention

The present invention relates to a system including server for generating a control instruction schedule for an electrical apparatus operable to supply thermal energy.

### Background

An electrical apparatus such as a heat pump apparatus may be used to supply thermal energy. The electrical apparatus may draw power from an electrical grid to support thermal energy. The operation of the electrical apparatus may be scheduled according to the requirements for thermal energy at particular times. Further improvements are desirable in the determination of operating schedules.

The present invention has been devised in light of the above considerations.

### Summary of the Invention

The present disclosure provides a system comprising an electrical apparatus operable to supply thermal energy to a medium in a space to attain a setpoint temperature of the medium, a server, and a communication network connecting the electrical apparatus and the server. The server is configured to receive a setpoint schedule. The setpoint schedule comprises a required setpoint temperature for the medium in each of a plurality of time slots.

The server is configured to determine a required thermal energy to be supplied from the electrical apparatus to attain the required setpoint temperature in each of a plurality of time slots.

The server is further configured to receive first predictive information for each of the plurality of time slots. The first predictive information comprises an indication of a supply-demand ratio between a level of energy which is expected to be supplied over each respective time slot and a level of expected consumer demand over the same time slot.

The server is configured to classify each of the plurality of time slots according to the indicated supply-demand ratio.

The server is configured to generate a control instruction schedule. The control instruction schedule comprises a required output from the electrical apparatus in each of the plurality of time slots. The control instruction schedule is generated based on the required thermal energy to be supplied and on the classification of each of the plurality of time slots. The control instruction schedule is generated to minimise a proportion of output required from the electrical apparatus in a time slot where the first predictive information indicates a low supply-demand ratio.

Generating a control instruction schedule in this way can enable the electrical apparatus to be controlled to supply thermal energy (e.g. to supply a higher proportion of thermal energy) during time slots where the supply-demand ratio is high (i.e. where there is a larger availability of supplied power with respect to the level of expected consumer demand). Generating a control instruction schedule in this way can enable the electrical apparatus to be controlled to not supply thermal energy (e.g. to supply a lower proportion of thermal energy) during time slots where the supply-demand ratio is low (i.e. where there is a smaller availability of supplied power with respect to the level of expected consumer demand).

In this way, a variability in load on an electrical grid to which the system is attached can be reduced. For example a variability in the supply-demand ratio of the electrical grid can be reduced. This can enable improved operation of the electrical grid.

The space to which thermal energy is supplied may be a part of an interior of a building. For example, the space may be a room in the building or part of a room in the building. The space to which thermal energy is supplied may be a part of a hot water supply system. For example, the space may be a hot water tank.

A time slot is a period of time for which first predictive information is available and for which a control instruction can be generated. The duration of each time slot may be fixed. The duration of each time slot may vary. For example, time slots may have different durations at different times of day. More distant time slots (e.g. time slots that are further in the future) may have different durations to closer time slots (e.g. time slots which are closer to the present time). A shorter time slot may allow more precise control over the electrical apparatus. For example, a shorter time slot may enable improved matching between the energy requirement of the electrical apparatus and the supply-demand ratio. However, a longer time slot can reduce the system resources required to generate the control instruction schedule. An appropriate duration of time slot can be selected to balance these advantages.

First predictive information may be received from an external source. The external source may be a third-party server operated by a third party. For example, the third-party server may be operated by an energy supplier. The first predictive information may be stored in a database on the third-party server. The duration of a time slot may be determined by the third party.

The first predictive information may be retrieved by the server. For example, the server may periodically request first predictive information from the third-party server. This can enable the server to acquire first predictive information as needed to generate the control instruction schedule. The server may request first predictive information from the third-party server when a level of traffic on a communication network to which the server is connected is low or is expected to be low. In this way, an impact on communication network performance caused by the server can be reduced. The server may request first predictive information from the third-party server following a user input to the server. For example, a user may force an update of the first predictive information to generate an updated control instruction schedule.

The first predictive information may be pushed from the third-party server. For example, the third-party server may periodically supply first predictive information to the server. In this way, first predictive information can be sent when an updated version is available. Therefore, requests to the third-party server at a time when no updated first predictive information is available can be reduced.

Where the server is unable to receive first predictive information from the third-party server, the server may instead use historic first predictive information. For example, the server may use first predictive information from a previous time period.

The server may classify each of the plurality of time slots according to the indicated supply-demand ratio by binning. For example, supply-demand ratio ranges may be determined for the bins in advance. The time slot may be classified into one of the bins according to the value of the supply-demand ratio. Classifying in this way can reduce the system requirements to generate a control instruction schedule by reducing a number of possible values for one of the input parameters.

The control instruction schedule may be generated periodically. The duration for which the control instruction schedule is generated may be different to the periodicity of generating the control instruction schedule. For example, the control instruction schedule may be generated daily, but may be generated for a period of more than a day. Generating the control instruction schedule may therefore include updating a part of the control instruction schedule. This can improve redundancy in the system. For example, if the third-party server becomes unavailable, a previously generated control instruction schedule can still be used.

The control instruction schedule may be generated based on user input. For example, a user may update the setpoint schedule and cause a new control instruction schedule to be generated. Therefore, a matching between the user requirements and the control instruction schedule can be improved.

When a control instruction schedule is generated, information may be sent to the third-party server. For example, an expected power requirement for each time slot may be sent to the third-party server. This can enable further improvements in operation of the electrical grid by providing further information regarding expected power requirement.

The required thermal energy to be supplied may be determined based on a number of parameters. For example, the server may receive data regarding present temperature of the medium. The server may receive data regarding the thermal capacity of the medium (i.e. the quantity of energy required to alter the temperature of the medium by a particular amount). The server may then use these parameters to determine an energy supply requirement.

The electrical apparatus may comprise one or more sensors to provide information on the thermal energy requirement. For example, the electrical apparatus may comprise one or more temperature sensors to determine a temperature of the medium. The electrical apparatus may provide data from these sensors to the server.

Data on thermal capacity may be set in advance. For example, a size of a room to be heated or cooled may be set in advance. A capacity of a hot water system or hot water tank may be set in advance.

The thermal capacity may be determined based on measured data. For example, the server may monitor a time required to effect a particular change in temperature at a particular rate of energy supply by the electrical apparatus and thereby determine a thermal capacity. This can allow the system to adapt to changes in, for example, thermal energy supply performance of the electrical apparatus over time.

The electrical apparatus may be operable to heat the medium. The electrical apparatus may be operable to cool the medium.

The generated control instruction schedule may be stored in the server. The server may generate control instructions to control the electrical apparatus based on the generated control instruction schedule. The generated control instruction schedule may be supplied to the electrical apparatus. The electrical apparatus may generate control instructions based on the generated control instruction schedule.

The server may be configured to receive a maximum thermal energy supply rate of the electrical apparatus. The server may be further configured to generate the control instruction schedule based on the maximum thermal energy supply rate of the electrical apparatus. For example, the server may determine a duration over which thermal energy must be supplied by the electrical apparatus given the available rate of thermal energy supply.

The thermal energy supply rate of the electrical apparatus may be variable. For example, the electrical apparatus may be operable to supply thermal energy at a lower rate than the maximum thermal energy supply rate. The generated control instruction schedule may therefore cause the electrical apparatus to operate at different energy supply rates during different time slots. In this way, the supply of thermal energy can be more precisely controlled.

The server may be configured to receive data indicative of an expected rate of loss of thermal energy from the medium for each of the plurality of time slots. The server may be configured to adjust a thermal energy requirement from the electrical apparatus based on the expected rate of loss of thermal energy from the medium.

Thermal energy supplied to the medium may be lost overtime. For example, thermal energy may be lost to the surroundings based on a temperature difference between the medium and the surroundings. This can affect the amount of thermal energy that needs to be supplied to the medium to attain a particular setpoint temperature. For example, if the temperature difference between the medium and the surroundings is greater, then more thermal energy may need to be supplied to counteract the expected loss of thermal energy. Similarly, if thermal energy is supplied further in advance, more thermal energy may need to be supplied to counteract the expected loss of thermal energy. This may therefore require the electrical apparatus to be operated for longer and/or at a higher thermal energy supply rate. Adjusting a thermal energy requirement from the electrical apparatus to account for this expected loss in thermal energy can therefore improve the ability of the system to attain the required setpoint temperature for each time slot.

In some examples, the expected rate of thermal energy loss may also alter the requirements of the control instruction schedule. For example, a time slot with a highest supply-demand ratio may not be suitable if it occurs too far in advance of a time slot having a particular setpoint, because a loss of thermal energy will be too high over the intervening period. The server may be configured to account for the expected rate of thermal energy loss when generating the control instruction schedule.

The expected rate of loss of thermal energy from the medium for each of the plurality of time slots may be determined based in part on a difference between an expected temperature of the medium in the respective time slot and an expected temperature of an area surrounding the space in the respective time slot.

Where the space to which thermal energy is supplied is a part of an interior of a building, the area surrounding the space may be, for example, an exterior of the building. The area surrounding the space may be another part of the interior of the building, such as an adjacent room. Where the space to which thermal energy is supplied is a part of a hot water system, the area surrounding the space may be, for example, a room in which the part of the hot water system is located.

The expected temperature of the area surrounding the space in a time slot may be determined based on a predicted weather condition for the time slot. For example, the server may receive predictive weather information. Alternatively, the server may use historic data, such as weather information for a corresponding period in a previous year.

The expected rate of loss of thermal energy may be determined based in part on measurements of the medium. For example, the server may monitor a change in temperature of the medium over a time period to determine a rate of thermal energy loss, based in part on a known or calculated thermal capacity of the medium.

In some arrangements, the server may be configured to determine a parameter for each time slot based on the supply-demand classification. The server may determine a product for each time slot. The product for the time slot may be a product of the respective parameter and the respective required output. The server may calculate a sum of the products. The server may generate a control instruction schedule to minimise the sum of the products.

Generating the control instruction schedule in this way can allow the server to account for different parameters. For example, the server may determine that it is preferable to supply thermal energy in an earlier time slot, even accounting for the increased thermal energy requirement to account for thermal energy loss, if the resultant product or sum of products is smaller. Therefore, this provides a particular means for determining an improved control instruction schedule.

The determined parameter may be an electricity unit cost. The cost of an electricity unit at a particular time is a particular parameter by which the supply-demand ratio may be classified and/or quantified.

The server may be configured to receive second predictive information comprising an indication of a carbon intensity for energy supplied over each of the plurality of time slots. The server may be configured to further classify each of the plurality of time slots according to the indicated carbon intensity. The control instruction schedule may be generated to minimise a proportion of output required from the electrical apparatus in a time slot where the second predictive information indicates a high carbon intensity of the energy supplied.

In this way, a level of carbon generation associated with a particular control instruction schedule can be reduced. Therefore, an environmental impact of operating the electrical apparatus according to the control instruction schedule can be reduced.

This may be an independent aspect of the present disclosure. In this independent aspect, the server may not receive first predictive information, and may generate the control instruction schedule based entirely on the second predictive data. In a further aspect of the present disclosure, the server may receive both first predictive information and second predictive information. The server may generate a first control instruction schedule based on the first predictive information and a second control instruction schedule based on the second predictive information. A user may select between the two control instruction schedules. The server may provide information to the user to guide the user in this choice. For example, the server may provide a total carbon requirement for each of the control schemes. The server may provide a total energy requirement for each of the control schemes. The server may provide a total cost for each of the control schemes.

The server may be configured to determine a parameter for each time slot based on the carbon intensity classification. The server may be configured to determine a product for each time slot. The product for the time slot may be a product of the of the respective parameter and the respective required output. The server may be configured to calculate a sum of the products for each time slot. The server may be configured to generate a control instruction schedule to minimise the sum of the products.

The setpoint schedule may be input to the server via a user interface. For example, a user may program the server with a setpoint schedule via the user interface. This can enable the user to select a desired setpoint temperature for one or more of the time slots.

The setpoint schedule may be determined in part based on historic data. For example, the server may track previous thermal energy requirements to determine a setpoint schedule. The server may track a presence or absence of a user in the space to determine the setpoint schedule. For example, if a user is determined to be away from the space during particular time slots, the setpoint may be set lower for those time slots. The server may track a demand on the electrical apparatus (such as a use of hot water heated by the electrical apparatus) to determine the setpoint schedule. For example, if the user is determined to demand hot water in a particular time slot (e.g. because they are running a shower), the server may determine that a higher setpoint is needed at or ahead of that time slot.

The electrical apparatus may comprise an air heater. The medium to be heated by the air heater may be air. The air heater may heat the air directly. The air heater may heat an intermediary medium such as a liquid to deliver heat to the air. For example, the intermediary medium may be water in a central heating radiator system.

The electrical apparatus may comprise a water heater. The medium to be heated by the water heater may be water.

The system may comprise a plurality of electrical apparatuses. For example, the system may comprise a water heater and an air heater. The system may comprise a plurality of air heaters. For example, the system may be arranged to heat different spaces or rooms within a building. Where multiple electrical apparatuses are included in the system, the server may prioritise thermal energy delivery by one or more of the electrical apparatuses. For example, the server may place a higher priority on heating or cooling a particular room than on heating a hot water system. The priority may be set by a user.

The electrical apparatus may comprise a heat pump apparatus. This may be an air-to-water heat pump apparatus. This may be an air-to-air heat pump apparatus.

The server may form part of the electrical apparatus. Alternatively, the server may be separate from the electrical apparatus. The server may be connected to the electrical apparatus by a communication network. The internet is an example of a communication network. An intranet is an example of a communication network. The server may be a cloud server.

The server may be configured to determine a further control instruction schedule without accounting for the first or second predictive information. This may be a control instruction schedule which causes the electrical apparatus to supply thermal energy in a way that temporally matches the thermal energy requirements. The electrical apparatus may thus supply thermal energy at a time when it is required, rather than in advance. Operating this control instruction schedule may provide increased comfort to a user. The user may be able to select between this further control instruction schedule and one of the first or second control instruction schedules. The server may provide information to the user to guide the user in this choice. For example, the server may provide a total carbon requirement for each of the control schemes. The server may provide a total energy requirement for each of the control schemes. The server may provide a total cost for each of the control schemes.

According to a second aspect of the present disclosure, there is provided a method of operating a system comprising an electrical apparatus operable to supply thermal energy to a medium in a space to attain a setpoint temperature of the medium. The method comprises a step of receiving a setpoint schedule, the setpoint schedule comprising a required setpoint temperature for the medium in each of a plurality of time slots. The method comprises a step of determining a thermal energy requirement from the electrical apparatus to attain the required setpoint temperature in each of a plurality of time slots. The method comprises a step of receiving first predictive information for each of the plurality of time slots. The first predictive information comprises an indication of a supply-demand ratio between a level of energy which is expected to be supplied over each respective time slot and a level of expected consumer demand over the same time slot. The method comprises a step of classifying each of the plurality of time slots according to the indicated supply-demand ratio. The method comprises a step of generating a control instruction schedule comprising a required output from the electrical apparatus in each of the plurality of time slots. The control instruction schedule is generated based on the required thermal energy to be supplied and on the classification of each of the plurality of time slots. The control instruction schedule is generated to minimise a proportion of required output from the electrical apparatus in a time slot where the first predictive information indicates a low supply-demand ratio.

According to a third aspect of the present disclosure, there is provided a computer program which, when executed by a computer, causes the computer to carry out steps of receiving a setpoint schedule, the setpoint schedule comprising a required setpoint temperature for the medium in each of a plurality of time slots; determining a thermal energy requirement from an electrical apparatus to attain the required setpoint temperature in each of a plurality of time slots; receiving first predictive information for each of the plurality of time slots, the first predictive information comprising an indication of a supply-demand ratio between a level of energy which is expected to be supplied over each respective time slot and a level of expected consumer demand over the same time slot; classifying each of the plurality of time slots according to the indicated supply-demand ratio; and generating a control instruction schedule comprising a required output from the electrical apparatus in each of the plurality of time slots. The control instruction schedule is generated based on the required thermal energy to be supplied and on the classification of each of the plurality of time slots. The control instruction schedule is generated to minimise a proportion of required output from the electrical apparatus in a time slot where the first predictive information indicates a low supply-demand ratio.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** illustrates a block diagram of a system according to the present disclosure.
**Figure 2** illustrates a block diagram of a heat pump apparatus.
**Figure 3** illustrates an example of first predictive information.
**Figure 4** illustrates a classification table generated from the first predictive information.
**Figure 5** illustrates a flow chart of an operation of the server.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

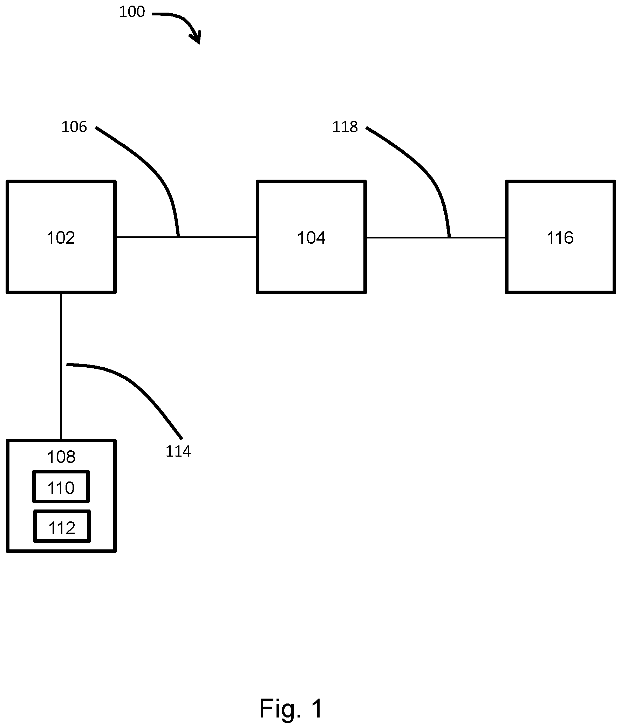

Fig. 1 illustrates a system 100 according to the present disclosure. The system 100 includes an electrical apparatus 102 and a server 104. In this embodiment, the electrical apparatus 102 and the server 104 are connected via a communication network 106. In other examples, the server 104 may instead form part of the electrical apparatus 102.

The system 100 further includes a control unit 108. The control unit 108 includes a user interface 110. The user interface 110 may be used to provide inputs to the system 100. The control unit 108 further includes a display 112. The display 112 may be used to provide information regarding the system 100 to a user. For example, the display 112 may be used to display status of the system 100 and/or a setpoint schedule for the system 100. The control unit 108 is connected to the electrical apparatus 102 via a wired connection 114. In other examples, the control unit 108 may be connected to the electrical apparatus via a wireless connection. In still further examples, the control unit 108 may be connected to the server 104 and not directly to the electrical apparatus 102. The control unit 108 may be an external device such as a computer or a mobile device. The control unit 108 may be connected to the server 104 or to the electrical apparatus 102 via the internet.

In this example, the server 104 is arranged to receive predictive information from a third-party server 116. The third-party server 116 is connected to the server 104 via a communication network 118. The predictive information includes first predictive information comprising an indication of a supply-demand ratio between a level of energy which is expected to be supplied over each respective time slot and a level of expected consumer demand over the same time slot. The predictive information may further include second predictive information comprising an indication of a carbon intensity for energy supplied over each of the plurality of time slots. The predictive information may additionally include weather predictive information.

The first predictive information, second predictive information, and weather predictive information may be received from the same third-party server 116. The first predictive information, second predictive information, and weather predictive information may be received from a plurality of third-party servers 116.

The electrical apparatus 102 is operable to supply thermal energy to a medium in a space to attain a setpoint temperature of the medium. For example, the electrical apparatus 102 may be operable to supply thermal energy to heat the air in a room. The electrical apparatus 102 may be operable to supply thermal energy to heat water in a water heater.

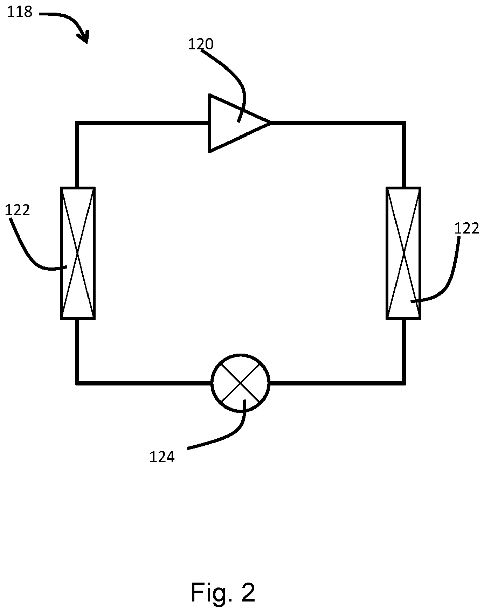

A heat pump apparatus 118, which is an example of an electrical apparatus 102 forming part of the system 100, is illustrated in Fig. 2.

The heat pump apparatus 118 comprises a compressor 120, two or more heat exchangers 122, each of which may be operable to function as either an evaporator or a condenser, and an expansion valve 124. These components are connected by connecting pipework to enable refrigerant to flow around the apparatus 118. Other configurations of a heat pump apparatus 118 may also be used.

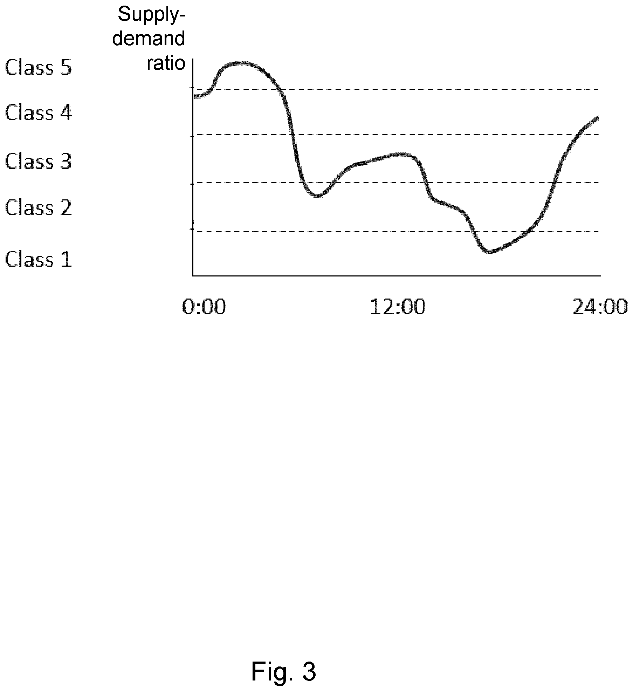

Figure 3 illustrates an example of first predictive information, which may be received by the server 104 from the third-party server 116. The first predictive information includes a set of values indicating the expected supply-demand ratio across a 24-hour period. In this example, the supply-demand ratio is highest between 01:00 and 05:00, and is lowest between 17:00 and 20:00.

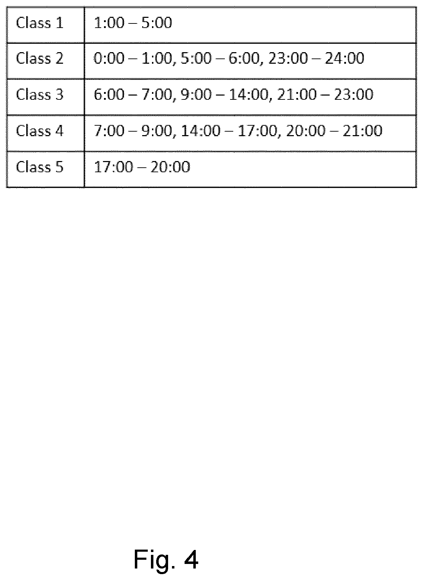

Figure 4 illustrates a classification table which may be generated by the server 104 based on the first predictive information. Each of the time slots is classified into one of five categories based on the supply-demand ratio in that time slot. The number of classes is not limited to five, and may be higher or lower as required. The duration of the time slots is not limited to 1 hour, and may be longer or shorter as required.

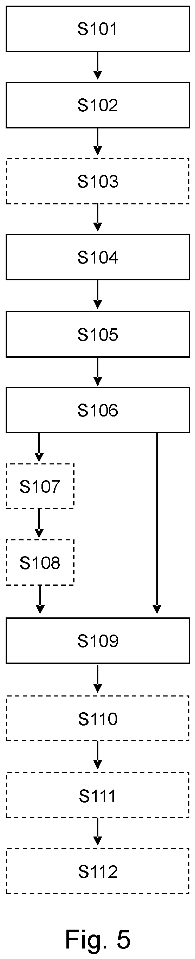

Figure 5 illustrates a method of operating the server to generate a control instruction schedule. In the first step S101, the server 104 receives a setpoint schedule. The setpoint schedule comprises a required setpoint temperature for the medium in each of a plurality of time slots. The setpoint schedule may be supplied to the server 104 via the control unit 108. Alternatively, the setpoint schedule may be generated based on historic usage data of the electrical apparatus 102.

In an optional second step S102, the server 104 receives a maximum thermal energy supply rate of the electrical apparatus 102.

In an optional third step S103, the server 104 receives data indicative of an expected rate of loss of thermal energy from the medium for each of the plurality of time slots. The data may include predictive weather data.

In a fourth step S104, the server determines a required thermal energy to be supplied from the electrical apparatus 102 to attain the required setpoint temperature in each of a plurality of time slots.

In a fifth step S105, the server 104 receives first predictive information for each of the plurality of time slots. The first predictive information comprises an indication of a supply-demand ratio between a level of energy which is expected to be supplied over each respective time slot and a level of expected consumer demand over the same time slot.

In a sixth step S106, the server 104 classifies each of the plurality of time slots according to the indicated supply-demand ratio.

In an optional seventh step S107, the server 104 receives second predictive information for each of the plurality of time slots. The second predictive information comprises an indication of a carbon intensity for energy supplied over each of the plurality of time slots,
In an optional eighth step S108, the server 104 classifies each of the plurality of time slots according to the carbon intensity.

In a ninth step S109, the server 104 generates a control instruction schedule comprising a required output from the electrical apparatus 102 in each of the plurality of time slots. The control instruction schedule is generated based on the determined required thermal energy to be supplied and on the classification of each of the plurality of time slots. The control instruction schedule is generated to minimise a proportion of output required from the electrical apparatus 102 in a time slot where the first predictive information indicates a low supply-demand ratio. Optionally, the control instruction schedule is further generated to minimise a proportion of output required from the electrical apparatus 102 in a time slot where the second predictive information indicates a high carbon intensity of the energy supplied.

In an optional tenth step S110, the server 104 provides the control instruction schedule to a user for approval.

In an optional eleventh step S111, the server 104 controls the electrical apparatus 102 according to the generated control instruction schedule.

In an optional twelfth step S112, the server 104 provides the control instruction schedule to the third-party server 116. The third-party server 116 may update the first predictive information accordingly.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A system (100) comprising
an electrical apparatus (102) operable to supply thermal energy to a medium in a space to attain a setpoint temperature of the medium; and
a server (104); wherein
the server (104) is configured
to receive a setpoint schedule, the setpoint schedule comprising a required setpoint temperature for the medium in each of a plurality of time slots;
to determine a required thermal energy to be supplied from the electrical apparatus (102) to attain the required setpoint temperature in each of a plurality of time slots;
to receive first predictive information for each of the plurality of time slots, the first predictive information comprising an indication of a supply-demand ratio between a level of energy which is expected to be supplied over each respective time slot and a level of expected consumer demand over the same time slot;
to classify each of the plurality of time slots according to the indicated supply-demand ratio; and
to generate a control instruction schedule comprising a required output from the electrical apparatus (102) in each of the plurality of time slots, the control instruction schedule being generated based on the required thermal energy to be supplied and on the classification of each of the plurality of time slots, the control instruction schedule being generated to minimise a proportion of output required from the electrical apparatus (102) in a time slot where the first predictive information indicates a low supply-demand ratio.

2. A system (100) according to claim 1, wherein the server (104) is configured to receive a maximum thermal energy supply rate of the electrical apparatus (102), and wherein the server (104) is further configured to generate the control instruction schedule based on the maximum thermal energy supply rate of the electrical apparatus (102).

3. A system (100) according to claim 1 or claim 2, wherein the server (104) is configured to receive data indicative of an expected rate of loss of thermal energy from the medium for each of the plurality of time slots, and wherein the server (104) is configured to adjust a thermal energy requirement from the electrical apparatus (102) based on the expected rate of loss of thermal energy from the medium.

4. A system (100) according to claim 3, wherein the expected rate of loss of thermal energy from the medium for each of the plurality of time slots is determined based on a difference between an expected temperature of the medium in the respective time slot and an expected temperature of an area surrounding the space in the respective time slot.

5. A system (100) according to claim 4, wherein the expected temperature of the area surrounding the space is determined based on a predicted weather condition for the respective time slot.

6. A system (100) according to any preceding claim, wherein the server (104) is configured to determine a parameter for each time slot based on the supply-demand classification, to determine a product for each time slot, the product being a product of the respective parameter and the respective required output, to calculate a sum of the products, and to generate a control instruction schedule to minimise the sum of the products.

7. A system (100) according to claim 6, wherein the determined parameter is an electricity unit cost.

8. A system (100) according to any preceding claim, wherein the server (104) is configured to receive second predictive information comprising an indication of a carbon intensity for energy supplied over each of the plurality of time slots, wherein the server (104) is configured to further classify each of the plurality of time slots according to the indicated carbon intensity, and wherein the control instruction schedule is generated to minimise a proportion of output required from the electrical apparatus (102) in a time slot where the second predictive information indicates a high carbon intensity of the energy supplied.

9. A system (100) according to claim 8, wherein the server (104) is configured to determine a parameter for each time slot based on the carbon intensity classification, to determine a product for each time slot, the product being a product of the respective parameter and the respective required output, to calculate a sum of the products for each time slot, and to generate a control instruction schedule to minimise the sum of the products.

10. A system (100) according to any preceding claim, wherein the setpoint schedule is input to the server (104) via a user interface.

11. A system (100) according to any of claims 1 to 9, wherein the setpoint schedule is determined based on historic setpoint data.

12. A system (100) according to any preceding claim, wherein the electrical apparatus (102) comprises an air heater, and wherein the medium comprises air and/or wherein the electrical apparatus (102) comprises a water heater, and wherein the medium comprises water.

13. A system (100) according to any preceding claim, wherein the electrical apparatus (102) comprises a heat pump apparatus (118).

14. A method of operating a system (100) comprising an electrical apparatus (102) operable to supply thermal energy to a medium in a space to attain a setpoint temperature of the medium;
the method comprising steps of
receiving a setpoint schedule, the setpoint schedule comprising a required setpoint temperature for the medium in each of a plurality of time slots;
determining a thermal energy requirement from the electrical apparatus (102) to attain the required setpoint temperature in each of a plurality of time slots;
receiving first predictive information for each of the plurality of time slots, the first predictive information comprising an indication of a supply-demand ratio between a level of energy which is expected to be supplied over each respective time slot and a level of expected consumer demand over the same time slot;
classifying each of the plurality of time slots according to the indicated supply-demand ratio; and
generating a control instruction schedule comprising a required output from the electrical apparatus (102) in each of the plurality of time slots, the control instruction schedule being generated based on the required thermal energy to be supplied and on the classification of each of the plurality of time slots, the control instruction schedule being generated to minimise a proportion of required output from the electrical apparatus (102) in a time slot where the first predictive information indicates a low supply-demand ratio.

15. A computer program which, when executed by a computer, causes the computer to carry out steps of
receiving a setpoint schedule, the setpoint schedule comprising a required setpoint temperature for the medium in each of a plurality of time slots;
determining a thermal energy requirement from an electrical apparatus (102) to attain the required setpoint temperature in each of a plurality of time slots;
receiving first predictive information for each of the plurality of time slots, the first predictive information comprising an indication of a supply-demand ratio between a level of energy which is expected to be supplied over each respective time slot and a level of expected consumer demand over the same time slot;
classifying each of the plurality of time slots according to the indicated supply-demand ratio; and
generating a control instruction schedule comprising a required output from the electrical apparatus (102) in each of the plurality of time slots, the control instruction schedule being generated based on the required thermal energy to be supplied and on the classification of each of the plurality of time slots, the control instruction schedule being generated to minimise a proportion of required output from the electrical apparatus (102) in a time slot where the first predictive information indicates a low supply-demand ratio.
